# DEMANDE DE BREVET EUROPEEN

(11) **EP 2 463 949 A1**
(43) Date de publication de la demande: **13.06.2012**
(21) Numéro de dépôt: 11290559.1
(22) Date de dépôt: 05.12.2011
(51) Int. Cl.: H01M 8/06, H01M 10/00, B60L 1/00, F02D 19/08, F02B 47/04

(54) **Procédé de réduction de la consommation en carburants hydrocarbonés d'un véhicule muni d'une injection de dihydrogène, à titre d'additif**

(30) Priorité: 09.12.2010 FR 1004795
(71) Demandeur: Sunhy Energy SARL, 91120 Palaiseau (FR)
(72) Inventeur: Deschamps, Arnaud, 91120 Palaiseau (FR); Puyenchet, Christophe, 75013 Paris (FR); Sortino, Eric, 40280 Saint Pierre du Mont (FR)

(57) **Abrégé**

Procédé d'approvisionnement en énergie électrique d'un accumulateur dédié à l'alimentation d'un système de production de dihydrogène par électrolyse et d'injection dudit dihydrogène, à titre d'additif, dans une chambre de combustion de carburant hydrocarboné d'un moteur thermique d'un véhicule apte à se déplacer par rapport à un environnement, comprenant les étapes suivantes :
- connecter, électriquement et mécaniquement, ledit accumulateur dudit système de production et d'injection de dihydrogène à une centrale électrique fixe par rapport audit environnement ;
-recharger l'accumulateur en énergie électrique au moyen de ladite centrale électrique ;
- déconnecter, électriquement et mécaniquement, l'accumulateur et la centrale électrique, pour rendre l'accumulateur autonome électriquement et mécaniquement, vis-à-vis de la centrale électrique ;
- alimenter électriquement, au moyen dudit accumulateur, ledit système de production et d'injection de dihydrogène dans la chambre de combustion du moteur thermique pour réduire la consommation en carburant du véhicule

## Description

La présente invention concerne la réduction de la consommation en carburants hydrocarbonés liquides ou gazeux et de l'émission de gaz carbonique, et des autres émissions polluantes issues de la combustion de carburants hydrocarbonés, des véhicules qui possèdent un moteur à chambre de combustion, interne ou externe, et qui sont munis d'un système de production de dihydrogène à bord d'un tel véhicule par électrolyse d'un composé riche en hydrogène et pour l'injection de ce dihydrogène à titre d'additif dans la chambre de combustion du moteur de ce véhicule.

Définitions au sens de la présente demande :
- un carburant hydrocarboné ou carburant est un combustible composé d'hydrocarbures liquides ou gazeux, notamment comme des carburants usuellement désignés par les termes « essence » ou « diesel » ou « GPL » ou « gaz naturel véhicule » ou « Biogaz » (bio-méthane) ou « biocarburant », ou « carburant de synthèse », tels que « CTL, Coal to Liquid », « GTL, Gas To Liquid », « BTL, Biomass To Liquid »
- un moteur thermique est un moteur réalisant la combustion interne ou externe d'un carburant dans une chambre de combustion et la conversion de l'énergie thermique produite par la combustion en énergie mécanique
- un « véhicule thermique » ou « véhicule » est un moyen de transport, notamment une automobile, un autobus, un camion, un tracteur agricole, un loco-tracteur, un navire ou un aéronef, muni d'un moteur thermique apte à permettre un déplacement du véhicule dans un environnement.
- « embarqué» signifie situé à bord d'un véhicule
- « à terre » signifie de position fixe dans l'environnement
- « Dihydrogène » est une molécule stable formée par deux atomes d'hydrogène, communément nommé « hydrogène »
- « Dioxygène » est une molécule stable formée par deux atomes d'oxygène, communément nommé « oxygène »
- Un composé riche en hydrogène est un composé chimique, une molécule, comportant une fraction d'atome d'hydrogène supérieur à 20% du nombre total d'atomes composants ladite molécule chimique. L'eau est un composé riche en hydrogène.
- Un «système de production et d'injection d'hydrogène» est un dispositif alimenté par de l'électricité, qui peut être stockée, et de l'eau ou un composé riche en hydrogène, apte à produire du dihydrogène, dans un stack ou empilement de cellules d'électrolyse et à l'injecter dans une chambre de combustion d'un moteur thermique à titre d'additif pour permettre une réduction de consommation en carburant et la réduction des émissions polluantes issues de la combustion de ce moteur.
- Un « électrolyseur pour la production d'hydrogène » est un composant d'un « système de production d'hydrogène par électrolyse », comprenant au minimum, un réservoir de liquide et un stack d'électrolyse
- Une « stack d'électrolyse » est un composant d'un «électrolyseur pour la production d'hydrogène », composé d'un empilement de cellules électrolytiques, positionnées en série ou en parallèle, ou une combinaison série et parallèle, apte à produire de l'hydrogène lorsque les cellules électrolytiques sont alimentées en électricité et en eau.
- Une « cellule électrolytique » est formée de deux électrodes, une anode et une cathode, isolées électriquement par un conducteur ionique, non conducteur électrique, et apte à conduire des ions.
- Un séparateur est un composant physique de la cellule électrolytique permettant de séparer partiellement les gaz ou les liquides produits à l'anode et à la cathode lors d'une réaction d'électrolyse.
- Un accumulateur d'énergie ou accumulateur permet de convertir l'énergie électrique dans une autre forme afin de la stocker et est capable de restituer cette énergie, par exemple, sous forme électrique, ultérieurement. Un accumulateur est par définition rechargeable. La durée de vie de l'accumulateur se caractérise par le nombre de cycles de charge et décharge sans perte de capacité de stockage supérieure à 80%.
- Un accumulateur électrochimique, permet de stocker et de restituer l'énergie électrique et fonctionne grâce à des réactions électrochimiques, au niveau de ses électrodes, qui assurent la conversion de l'énergie chimique en énergie électrique. Une batterie est un accumulateur électrochimique.
- Les « émissions polluantes issues de la combustion » concernent les émissions de monoxyde de carbone, d'hydrocarbures imbrutés, de particules solides carbonées, notamment.
- un « rendement de conversion thermodynamique » ou « rendement de conversion » d'un système thermodynamique est le rapport entre l'énergie utilisable produite par le système, ou travail, et l'énergie interne, ou chaleur et travail, du système considéré isolé.
- une source d'énergie fossile est une source d'énergie non-renouvelable comme le pétrole, le charbon, le gaz naturel ou les matières minérales utilisées pour la fission ou la fusion nucléaire.
- une source d'énergie renouvelable est une source d'énergie potentiellement disponible en quantité illimitée comme l'énergie solaire (comprenant aussi au sens thermodynamique les énergies hydraulique, éolienne, hydrolienne, l'énergie des vagues, la biomasse), l'énergie géothermique, l'énergie gravitationnelle, comme l'énergie marémotrice.
- une centrale électrique est une unité de production d'électricité à terre.
- un réseau de distribution électrique ou « secteur » est un ensemble de lignes électriques, reliées à des moyens de production d'électricité ou usines électriques, ledit ensemble composant avec lesdits moyens de production une centrale électrique, et ledit ensemble permettant la distribution de l'énergie électrique, produite par lesdites usines, dans un secteur géographique.
- une prise électrique est une extrémité d'une ligne électrique d'un réseau, libre pour le raccordement d'appareils électriques ou de stockage d'électricité.
- un enfoncement mâle-femelle désigne pour deux prises électriques destinées à être raccordées en une connexion électrique, une liaison temporaire entre les prises ou séparable, obtenue par le placage élastique et mécanique d'un élément mâle protubérant d'une des prises, enfoncé dans un élément femelle creux de l'autre prise.
- Un « véhicule hybride thermique électrique » est un véhicule possédant un moteur thermique, un moteur électrique et une batterie de stockage d'électricité. L'électricité est produite à bord à partir de l'alternateur du véhicule, sauf dans le cas d'une pile à combustible embarquée, et par récupération de l'énergie au freinage.
- Un véhicule hybride rechargeable est un véhicule thermique électrique dont la batterie peut se recharger sur le réseau électrique par l'intermédiaire d'une prise électrique.

Selon ces définitions :
Dans le domaine des transports, au moyen d'un véhicule thermique, l'art antérieur à l'invention est confronté à la nécessité d'embarquer, à bord du véhicule, l'énergie nécessaire à tous les besoins de ce véhicule durant son déplacement, sous la forme d'une réserve de carburant hydrocarboné. Cette réserve sert notamment à assurer l'alimentation du moteur thermique du véhicule pour produire de l'énergie mécanique et l'alimentation électrique de ce véhicule, par couplage du moteur avec un alternateur et une batterie, apte à produire et stocker de l'énergie électrique à bord, à partir de l'énergie mécanique du moteur.

Cette nécessité est une contrainte qui limite sévèrement l'intérêt des électrolyseurs de production d'hydrogène embarqués à bord de véhicules thermiques et alimentés par la batterie du véhicule, rechargée en électricité par l'alternateur du véhicule, aux fins de réduire la consommation desdits véhicules en carburant hydrocarboné.

En effet, le bilan énergétique, au niveau du véhicule thermique, de l'électrolyseur embarqué alimenté par l' alternateur du véhicule, fait intervenir, d'une part une réduction de consommation du moteur par l'injection de dihydrogène qui peut atteindre 12% de la consommation totale en carburant du moteur, pour une injection d'hydrogène correspondant à 2% de l'énergie chimique (pouvoir calorifique inférieur) contenu dans le carburant en combustion à l'instant donné, et d'autre part une augmentation de la consommation en carburant du moteur pour fournir via l'alternateur, l'énergie électrique nécessaire à la production de dihydrogène par électrolyse. En pratique, compte-tenu du rendement de conversion électrique des moteurs thermiques munis d'un alternateur, qui avoisine les 15% en moyenne pour la production d'énergie électrique à partir de carburant du véhicule, l'avantage en termes de réduction de consommation de carburant est négligeable, voire négatif, pour un véhicule thermique utilisant un électrolyseur de production d'hydrogène.

L'alimentation électrique d'un l'électrolyseur de production d'hydrogène embarqué, par un alternateur couplé au moteur et le stockage de l'énergie électrique produite dans une batterie rechargeable, ne permet donc pas, en pratique, une réduction significative de la consommation en carburant d'un véhicule thermique et des émissions associées de gaz carbonique ou dioxyde de carbone. Il permet en outre de diminuer sensiblement les émissions polluantes à l'échappement.

L'art antérieur connaît aussi l'utilisation de sources d'énergie renouvelables disponibles pendant le déplacement d'un véhicule thermique pour alimenter un électrolyseur de production d'hydrogène embarqué. Un exemple en est l'énergie solaire collectée par des panneaux photovoltaïques disposés sur le toit du véhicule. Toutefois, cette solution pose des problèmes d'encombrement des panneaux, la consommation électrique d'un électrolyseur de production d'hydrogène embarqué étant de 10 à 15 kWh environ sur un parcours représentatif journalier d'un autobus. La demande en énergie électrique d'un électrolyseur de production d'hydrogène apparaît alors, sous cette contrainte, comme juste satisfaite pour des véhicules pouvant bénéficier d'une surface de collection de l'énergie solaire importante (au moins 20 m²) comme dans le cas d'un toit d'autobus, lors d'une journée de fort ensoleillement. Cette solution apparaît donc comme une solution d'adaptation et de déploiement difficile aux véhicules thermiques de plus petite taille de toit qu'un autobus, comme notamment les automobiles, les tracteurs routiers, et les véhicules existants dont le toit est utilisé pour du stockage de marchandise ou d'autres équipements comme le climatiseur, ou ne pouvant supporter le poids d'équipements photovoltaïques.

De surcroît, la production d'électricité à bord du véhicule par le moyen d'énergie solaire est par nature inconstante, ce qui induit un désaccord entre le besoin électrique pour la production d'hydrogène à bord du véhicule et la production électrique journalière de l'installation photovoltaïque.

L'art antérieur connaît aussi comme moyen de remplacement des carburants, des vecteurs énergétiques, qui sont des sources d'énergie pratiquement non disponibles dans la nature, comme l'électricité et l'hydrogène. L'utilisation de ces vecteurs pour alimenter des véhicules à l'aide de moteurs adaptés, électriques ou à combustion de dihydrogène, ou à pile à combustible hydrogène, rencontre cependant des problèmes. Pour un véhicule à moteur électrique, l'autonomie de batterie d'alimentation du moteur est un problème important, la batterie devant stocker toute l'énergie nécessaire au déplacement du véhicule électrique et non pas seulement l'énergie nécessaire à l'alimentation électrique d'éclairage ou de confort comme dans les véhicules thermiques de l'art antérieur. Pour un moteur à combustion d'hydrogène ou à pile à combustible hydrogène, la sécurité dans le transport d'hydrogène, qui doit être comprimé à terre et stocké sous fortes pressions à bord des véhicules, est aussi un problème identifié. Ces problèmes ne permettent pas de rendre équivalentes en tant que moyens de transport, ces solutions à la solution d'un véhicule thermique à carburant liquide, notamment. La juxtaposition, connue de l'art antérieur, de deux moteurs sur un même véhicule, un thermique et un électrique pour obtenir un véhicule hybride constitue dans ce contexte un indice d'insuffisance en termes d'autonomie de déplacement de la solution exclusivement électrique, pour remplacer la solution thermique. Par ailleurs, le rechargement de la batterie d'un véhicule thermique sur le secteur au moyen d'un chargeur de batterie est une opération exceptionnelle, qui n'est pas identifiée dans l'art antérieur comme une pratique de remplacement, équivalente à l'utilisation de l'alternateur du véhicule, pour recharger la batterie de ce véhicule dans une utilisation normale dudit véhicule thermique.

L'art antérieur connait aussi les véhicules hybrides thermique électrique, disposant d'une batterie de stockage d'électricité de capacité variable. Cette batterie est généralement rechargée à partir de l'énergie chimique du carburant par l'intermédiaire du moteur thermique et d'un alternateur (souvent le moteur électrique fonctionnant en inverse). L'électricité peut être produite aussi lors du freinage. Dans le cas de véhicules hybrides rechargeables, la batterie du système hybride peut être rechargée par l'intermédiaire du réseau électrique par l'intermédiaire d'une prise électrique. Il n'est cependant pas directement envisageable dans l'art antérieur d'utiliser la batterie du système hybride pour l'alimentation d'un électrolyseur à hydrogène car les caractéristiques des batteries des véhicules hybrides sont éloignées des caractéristiques de l'électrolyseur et des contraintes du procédé d'injection d'hydrogène. La tension nominale des batteries de stockage des véhicules hybrides est généralement assez élevée, entre 300 et 600 Volts et le courant est relativement faible, de l'ordre de 50 à 100A. La conception de ces batteries est mal adaptée à l'alimentation d'un électrolyseur qui fonctionne en basse tension et fort courant (plusieurs centaines d'ampères).

Un convertisseur de tension est envisageable entre la batterie du véhicule hybride et l'électrolyseur mais le rendement de conversion électrique est de l'ordre de 80% au mieux pour les forts courants, ce qui affecterait le rendement énergétique global de la production d'hydrogène. Le fort courant de décharge de la batterie imposé par l'électrolyseur est alors un facteur d'endommagement des batteries de véhicules hybrides.

Dans l'état de l'art, l'utilisation d'un électrolyseur de production d'hydrogène qui fonctionne en fort courant continu de faible tension, 24V par exemple, et produit du dihydrogène utilisable à pression atmosphérique puis l'injecte pour obtenir une réduction de consommation et d'émission de gaz carbonique, et de polluants issus de la combustion, d'un moteur thermique est donc souhaitable. Cependant dans l'art antérieur, un tel électrolyseur est sans intérêt pour le moteur d'un véhicule thermique compte-tenu de la nécessité corrélative de produire l'énergie électrique nécessaire à l'électrolyse, à bord du véhicule.

Il existe donc, dans l'art antérieur, un besoin non satisfait et de longue date pour un procédé ou un dispositif permettant à un électrolyseur de production d'hydrogène embarqué sur un véhicule thermique, de faire économiser effectivement du carburant hydrocarboné au véhicule et de réduire simultanément les émissions de gaz carbonique dues audit véhicule.

Dans ce contexte, l'invention de la présente demande concerne d'abord un procédé d'approvisionnement en énergie électrique, de préférence d'origine renouvelable, d'un accumulateur dédié à l'alimentation d'un système de production de dihydrogène par électrolyse et d'injection dudit dihydrogène, à titre d'additif, dans une chambre de combustion de carburant hydrocarboné d'un moteur thermique d'un véhicule apte à se déplacer par rapport à un environnement, qui comprend les étapes suivantes :
- connecter, électriquement et mécaniquement, ledit accumulateur dudit système de production et d'injection de dihydrogène à une centrale électrique fixe par rapport audit environnement ;
- recharger l'accumulateur en énergie électrique au moyen de ladite centrale électrique ;
- déconnecter, électriquement et mécaniquement, l'accumulateur et la centrale électrique, pour rendre l'accumulateur autonome électriquement et mécaniquement, vis-à-vis de la centrale électrique ;
- alimenter électriquement, au moyen dudit accumulateur, ledit système de production et d'injection de dihydrogène dans la chambre de combustion du moteur thermique, pour réduire la consommation en carburant et les émissions polluantes du véhicule

L'invention concerne aussi un dispositif pour la diminution de la consommation en carburant d'un véhicule automobile, comprenant un véhicule apte à déplacer sa position par rapport à un environnement, ledit véhicule comprenant un moteur thermique , ledit moteur comprenant une chambre de combustion d'un carburant hydrocarboné, ledit véhicule comprenant un système de production de dihydrogène par électrolyse et d'injection dudit dihydrogène, à titre d'additif, dans la chambre de combustion, ledit système de production et d'injection de dihydrogène comprenant un accumulateur d'électricité, disposé à bord du véhicule, cet accumulateur étant activé électriquement et alimenté électriquement par un accumulateur rechargeable électriquement et disposé à bord du véhicule, le dispositif comprenant une centrale électrique disposée à terre, dans l'environnement, et un moyen de connexion électrique et mécanique reliant ladite centrale électrique et l'accumulateur, la centrale étant apte à recharger électriquement l'accumulateur lorsque cet accumulateur est relié électriquement et mécaniquement, par le moyen de connexion, à cette centrale, ledit moyen de connexion étant constitué d'une première prise électrique, fixe par rapport au véhicule et reliée électriquement à l'accumulateur, et constitué d'une seconde prise électrique, fixe par rapport à l'environnement et reliée électriquement à la centrale, la première prise électrique et la seconde prise électrique du dispositif étant maintenues en contact électrique et mécanique, de façon séparable, par un moyen de fixation de la première prise sur la seconde prise, et ledit accumulateur étant dédié à l'alimentation électrique dudit système de production de dihydrogène par électrolyse et d'injection dudit dihydrogène.

Le terme « dédié » ou les mots synonymes « dédié à l'électrolyse » ou l'expression synonyme «de caractéristiques techniques adaptées pour l'alimentation d'un système de production de dihydrogène par électrolyse » signifient dans toute la présente demande que la fonction d'alimentation électrique dudit accumulateur dédié est réservée et spécifique à l'alimentation d'un électrolyseur embarqué, réservation obtenue par limitation des connexions électriques de l'accumulateur, servant à l'alimentation, par cet accumulateur, d'éléments électriques embarqués à bord du véhicule, au seul électrolyseur embarqué et spécificité obtenue par choix des caractéristiques de l'accumulateur en considération des besoins exclusifs en énergie électrique, de l'électrolyseur embarqué.

Des caractéristiques de l'accumulateur dédié qui sont spécifiques à l'électrolyseur embarqué seront notamment une faible tension, un ordre de grandeur de cette faible tension étant 24V et un fort courant maximum, d'un ordre de grandeur de ce fort courant étant 500 ampères. Ces caractéristiques pouvant être adaptées à partir de la mesure concrète, par des appareils connus de l'art antérieur (Voltmètre et ampèremètre) des caractéristiques en tension et en courant correspondant aux besoins en énergie électrique de chaque type d'électrolyseur embarqué, sur un parcours réel du véhicule, aux fins de dimensionnement et de sélection de l'accumulateur dédié.

En d'autres termes, la fonction d'un accumulateur dédié à l'électrolyse est l'alimentation électrique d'un électrolyseur

Dans des variantes de l'invention :
- ledit système de production et d'injection de dihydrogène comprend un réservoir d'eau, un électrolyseur et un accumulateur dédié à l'électrolyseur, pour la production de dihydrogène à partir de l'électrolyse de l'eau dudit réservoir d'eau, au moyen de l'énergie électrique dudit accumulateur dédié
- ledit système de production et d'injection de dihydrogène comprend un réservoir d'ammoniaque, un électrolyseur et un accumulateur dédié à l'électrolyseur, pour la production de dihydrogène à partir de l'électrolyse de l'ammoniaque dudit réservoir d'ammoniaque, au moyen de l'énergie électrique dudit accumulateur dédié.
- ledit système de production et d'injection de dihydrogène comprend un réservoir d'urée en solution aqueuse, un électrolyseur et un accumulateur dédié à l'électrolyseur, pour la production de dihydrogène à partir de l'électrolyse de l'urée dudit réservoir d'urée en solution aqueuse, au moyen de l'énergie électrique dudit accumulateur dédié.
- ladite centrale électrique comprend un moyen de production d'énergie électrique à partir d'un combustible fossile et ledit moyen de production possède un rendement de conversion en énergie électrique, de l'énergie contenue dans ledit combustible fossile, qui est supérieur au rendement de conversion du carburant hydrocarboné en énergie électrique à bord du véhicule
- ladite centrale électrique comprend un moyen de production d'énergie électrique à partir d'une source d'énergie renouvelable
- ladite source d'énergie renouvelable est solaire
- ladite centrale électrique comprend un réseau de distribution électrique dans un secteur géographique
- ledit moyen de fixation est un moyen élastique et mécanique permettant un enfoncement mâle-femelle de la première prise et de la seconde prise

### DESCRIPTION DE L'INVENTION

Un premier mode de réalisation du dispositif selon l'invention est décrit en application à une automobile ou véhicule destiné au transport de passagers. Ce type de véhicule est muni à bord d'une batterie de démarrage, d'éclairage et de confort, pour assurer l'alimentation électrique des éléments électriques du véhicule, cette batterie est rechargée par un alternateur situé à bord du véhicule, auquel cette batterie est connectée.

Cette automobile est munie, d'un électrolyseur ou système de production d'hydrogène embarqué, à partir d'eau, composé au moins d'un réservoir d'eau, d'un accumulateur électrochimique de conception et de caractéristiques adaptés aux besoins et contraintes de l'électrolyseur ou dédié à celui-ci et d'un stack d'électrolyse, comportant un séparateur physique permettant une séparation partielle des gaz et liquides produits à l'anode et à la cathode de la cellule d'électrolyse.

En particulier pour l'électrolyse de l'eau, la production d'hydrogène s'accompagne d'une production d'oxygène, les deux gaz sont produits en proportion stoechiométrique et le mélange peut s'enflammer en présence d'une activation électrique ou thermique de quelques milli-joules. Ainsi, il est important pour des questions de sécurité dans le véhicule de séparer ces deux gaz au moment de leur production dans la cellule d'électrolyse par l'intermédiaire d'un séparateur.

Le stack d'électrolyse est connecté en entrée au réservoir d'eau et en sortie à une arrivée d'air du moteur du véhicule par un premier tuyau pour l'hydrogène, indispensable, et un second tuyau pour l'oxygène, optionnel, les tuyaux étant destinés à l'injection séparée de l'hydrogène et de l'oxygène, produits séparément dans le stack d'électrolyse de l'eau.

L'électrolyseur est donc relié électriquement à l'accumulateur du système de production d'hydrogène afin de produire de l'hydrogène, par électrolyse en courant continu du contenu du réservoir, le composé riche en hydrogène.

L'accumulateur du système de production d'hydrogène permet une indépendance énergétique et mécanique complète vis-à-vis des autres composants du véhicule. Ainsi la production d'hydrogène ne dépend que de l'état de charge de l'accumulateur du système, permettant une production d'hydrogène dissociée des états du véhicule.

L'accumulateur du système de production d'hydrogène est conçu spécifiquement pour satisfaire aux caractéristiques particulières de fonctionnement de l'électrolyseur. En particulier, l'accumulateur doit fonctionner normalement, c'est-à-dire sans perte de capacité de stockage dans le temps, avec une importante profondeur de décharge afin de ne pas alourdir inutilement le véhicule.

L'accumulateur doit pouvoir effectuer un grands nombre de cycles de charge et décharge, au moins 2500, sans perte de capacité de stockage supérieure à 80%.

L'accumulateur doit posséder, en outre, une forte densité énergétique massique et volumique pour permettre son intégration physique dans le véhicule avec un faible impact sur la surconsommation du véhicule, lié au poids de l'accumulateur.

Le courant de décharge et la tension nominale de l'accumulateur sont adaptés aux caractéristiques de courant et de tension de l'électrolyseur. A la différence des véhicules hybrides où la batterie du véhicule alimente un moteur électrique, la tension appliquée à un électrolyseur est faible, typiquement 24 V, et le courant d'électrolyse est de l'ordre de plusieurs centaines d'ampères, jusqu'à 500 ampères.

De plus, l'optimisation énergétique du procédé d'injection d'hydrogène pour la réduction de carburant nécessite des variations de production d'hydrogène très importantes et rapides, c'est-à-dire des variations de courant d'électrolyse importantes et rapides. L'accumulateur du système de production d'hydrogène doit, de ce fait, permettre des décharges de forts courants, répétées et rapides, sans endommagement de l'accumulateur.

L'accumulateur du système de production d'hydrogène permet d'éviter une modification lourde de l'installation électrique et énergétique d'origine du véhicule, qui nécessite la mise en oeuvre complexe d'un nouveau câblage électrique entre la batterie d'origine du véhicule et l'électrolyseur, ou qui nécessite la modification technique du système de contrôle et de gestion de l'énergie, par exemple dans le cas des véhicules hybrides thermique et électrique. L'accumulateur du système de production d'hydrogène permet une adaptation du système de production d'hydrogène sur un véhicule sans aucune modification technique du véhicule pouvant altérer son fonctionnement ou la durée de vie de ses composants d'origine, en premier lieu la batterie d'origine du véhicule.

Pour l'injection de l'hydrogène, produit par l'électrolyseur, dans le moteur du véhicule, ledit tuyau d'hydrogène relie la sortie hydrogène de l'électrolyseur à la durite d'admission d'air du moteur du véhicule.

Pour l'injection de l'oxygène, le cas échéant, produit par l'électrolyseur, dans le moteur du véhicule, ladite conduite d'oxygène relie la sortie oxygène de l'électrolyseur à la durite d'admission d'air du véhicule. L'injection d'hydrogène et, le cas échéant, d'oxygène se fait par deux points d'injection spatialement espacés sur la durite d'admission d'air.

Un électrolyseur produisant des gaz, hydrogène et, le cas échéant, oxygène, en légère surpression et la durite d'admission en air d'un moteur à combustion étant en légère dépression, l'électrolyseur, selon l'invention, dans cette configuration, réalise ainsi l'injection des gaz dans la durite d'admission en air du moteur, et donc dans la chambre de combustion du moteur.

Pour alimenter en eau, par gravité, le stack d'électrolyse, le réservoir d'eau est disposé à une altitude supérieure à celle du stack d'électrolyse.

A titre de mode de réalisation permettant de comprendre le bilan énergétique de l'invention, en termes de réduction de consommation de carburant hydrocarboné au niveau d'un secteur géographique couvert par une centrale électrique , le véhicule est relié à une centrale électrique qui comprend un réseau électrique de distribution de type secteur, ladite centrale comprenant uniquement des usines de production d'électricité qui consomment du carburant fossile pour produire de l'énergie électrique avec un rendement de conversion de 30% environ au niveau d'un accès quelconque au réseau de distribution. L'énergie électrique en provenance des usines électriques est donc distribuée par un réseau électrique constitué de lignes électriques, réparties géographiquement sur un territoire ou secteur, pour permettre l'approvisionnement en électricité de l'automobile, dans le secteur du réseau, de façon délocalisée par rapport aux usines de production d'énergie électrique.

Le lien entre la centrale électrique et le véhicule est réalisé par une connexion électrique, apte à transporter l'énergie électrique nécessaire qui comprend deux parties :
- une partie embarquée à bord du véhicule comprenant une première prise électrique femelle et un premier câble électrique reliant cette prise femelle à l'accumulateur du système de production d'hydrogène située à bord de ce véhicule.
- une partie à terre, solidaire du réseau électrique et comprenant une seconde prise électrique mâle et un second câble électrique reliant cette seconde prise mâle audit réseau électrique.

Les deux parties sont adaptées l'une à l'autre par un moyen de fixation élastique permettant un enfoncement mâle-femelle de la prise mâle et de la prise femelle, un maintien de cellés-ci en contact électrique et mécanique, et la rupture de ce contact par séparation de la prise mâle et de la prise femelle . Un tel moyen de fixation est connu de l'art antérieur et se retrouve sur tout appareil électrique connectable au « secteur » ou réseau électrique de façon temporaire comme le moyen de connexion au secteur formé par une prise de courant et le fil d'un appareil électrique ménager. Ledit moyen de connexion au secteur étant seulement adapté pour le dimensionnement électrique des premier et second câbles, au nombre d'ampères nécessaire au chargement de l'accumulateur du système de production d'hydrogène.

Le procédé d'utilisation de l'invention est alors le suivant :
- L'automobile est connectée au secteur ou réseau électrique pour recharger l'accumulateur du système de production d'hydrogène destiné à alimenter électriquement l'électrolyseur de production d'hydrogène embarqué. Le réseau de distribution s'il est alternatif, est transformé en courant continu par un convertisseur courant alternatif-courant continu connu de l'art antérieur, ce qui permet de recharger l'accumulateur à partir du secteur.
- Une fois la recharge de l'accumulateur terminée, l'automobile est déconnectée du secteur, aucune connexion électrique ou mécanique ne subsiste entre le véhicule et le secteur.
- L'accumulateur est alors utilisé pour alimenter en énergie électrique l'électrolyseur de l'eau embarqué à bord de l'automobile et bénéficier de la réduction de consommation de carburant hydrocarboné, de diminuer l'émission de gaz carbonique dans la mesure correspondante à la diminution de consommation de carburant, permise par le système de production d'hydrogène et d'injection de cet hydrogène à titre d'additif dans le moteur de l'automobile de façon à en réduire la consommation de carburant hydrocarboné et à réduire les émissions polluantes issues de la combustion de ce carburant hydrocarboné.

Pour évaluer la réduction de consommation de carburant hydrocarboné permis par le dispositif de l'invention sur un véhicule muni d'un moteur thermique dont le dispositif d'injection d'hydrogène est alimenté par une centrale électrique, il suffit d'observer que pour le rendement de conversion électrique d'une centrale électrique de type réseau électrique ou « secteur », alimenté par de l'énergie fossile est couramment admise une valeur de 30%, et qu'une valeur de rendement électrique d'un moteur thermique muni d'un alternateur couramment admise est de 15% en conditions réelles de parcours urbain notamment.

Dans ce contexte, il est alors possible de bénéficier intégralement de la réduction de consommation de 12% en carburant hydrocarboné sur un véhicule équipé de l'invention, en utilisant l'énergie électrique de la centrale, en la stockant dans l'accumulateur du système de production d'hydrogène, et en alimentant l'électrolyseur embarqué à bord du véhicule de production et d'injection d'hydrogène, à titre d'additif, dans la chambre de combustion d'un moteur thermique.

Du point de vue énergétique, les calculs, en première approximation, démontrent que l'avantage sur l'économie globale d'énergie est plus important si l'alimentation en électricité de l'électrolyseur provient d'une centrale électrique, fixe par rapport à l'environnement, même ci cette centrale électrique utilise une énergie fossile, plutôt que du moteur à combustion du véhicule.

A titre d'exemple, prenons le cas d'un véhicule consommant en moyenne 10 litres de carburant par heure. Pour simplifier les calculs, nous considérons un pouvoir calorifique du carburant de 10 kWh/ litre et un rendement de conversion de l'électricité en hydrogène par électrolyse de l'eau, de 80% en moyenne. Nous observons une réduction de 12% de la consommation en carburant en injectant un débit d'hydrogène correspondant à 2% de l'énergie consommée par le véhicule, soit 2% de 10 litres/ heure.

L'économie d'énergie en carburant, réalisée en une heure, par l'amélioration du rendement de combustion par l'ajout d'hydrogène, incluant la valeur énergétique de l'hydrogène injectée, est égale à 12% multiplié par 10 litres multiplié par 10 kWh/ litre, soit 12 kWh.

L'énergie électrique nécessaire, convertie en hydrogène, injectée en une heure, permettant d'obtenir 12% d'économie de carburant, est égale à 2% multiplié par 10 litres, multiplié par 10 kWh/ litre, divisé par 0,8 (rendement moyen de l'électrolyseur), soit 2,5 kWh.

Si l'énergie électrique, utilisée pour la production d'hydrogène à bord, est produite à bord du véhicule à partir du couple moteur-alternateur, alors la consommation d'énergie primaire, c'est-à-dire la consommation en carburant du véhicule, est 2,5 kWh, divisé par 0,15 (rendement de production d'électricité à bord à partir du moteur et de l'alternateur sur un cycle urbain ou mixte), soit 16 kWh. L'économie globale en énergie est donc égale à 12 kWh auquel est retranché 16 kWh, soit - 4 kWh environ. Le procédé d'injection d'hydrogène, considéré dans sa globalité, conduit, dans ce cas, à une surconsommation énergétique.

Si l'énergie électrique, utilisée pour la production d'hydrogène à bord, est produite à partir d'une centrale électrique, fixe par rapport à l'environnement, alors la consommation d'énergie est 2,5 kWh divisé par 0,3 (rendement de production d'électricité le plus défavorable d'une centrale électrique), soit 8 kWh.

L'économie globale en énergie est donc égale à 12 kWh auquel est retranché 8 kWh, soit + 4kWh environ. Le procédé d'injection d'hydrogène, considéré dans sa globalité, conduit, dans ce cas, à une réelle économie énergétique du point de vue global, correspondant, par heure de fonctionnement du véhicule, à 4 kWh pour 10 litre de carburant consommé, soit 100 kWh (10 litres multiplié par 10kWh/ litre), soit 4% d'économie d'énergie.

Dans le cas où la centrale électrique produit de l'électricité à partir d'énergies décarbonées, l'économie d'énergie fossile, si le carburant du véhicule est exclusivement d'origine fossile, dans sa globalité, est directement égal à la réduction de la consommation en carburant des véhicules équipés d'injection d'hydrogène, soit 12% d'économie d'énergie fossile.

Dans le cas où les centrales électriques d'un secteur géographique fonctionnent à partir d'un mix d'énergie fossile et d'énergie décarbonée, l'économie d'énergie fossile, si le carburant du véhicule est exclusivement d'origine fossile, au niveau du véhicule, varie de 4 % à 12%.

L'invention peut donc servir soit à diminuer la dépendance aux carburants d'origine fossile des véhicules d'un territoire desservi par une centrale électrique soit à diminuer la consommation en énergie fossile sur ce territoire du système constitué par la centrale et les véhicules équipés de l'invention.

Par ailleurs, la combustion de l'hydrogène dans le moteur thermique étant dé-carbonée au sens de l'absence de production de CO₂ (ou gaz carbonique), la réduction de consommation en énergie fossile permise par l'invention s'accompagne aussi d'une réduction d'émission de CO₂ au niveau du véhicule, , et de la mise en valeur de l'aspect dé-carboné de la production électrique de la centrale. L'économie globale en CO₂ du procédé varie, en première approximation, selon la nature de l'énergie primaire utilisée pour produire l'électricité, entre 4% et 12%

II est intéressant de noter que la part de l'énergie électrique, nécessaire pour la production d'hydrogène à bord, dans le cas de l'électrolyse de l'eau, sur la réduction de consommation de carburant, est égale à 2,5 kWh divisé par 12 kWh, soit 20 % environ.

La perte d'énergie sous forme de chaleur du procédé de production et d'injection d'hydrogène correspond au rendement de l'électrolyseur, soit, dans le cas de l'électrolyse de l'eau, une perte énergétique, en régime stationnaire d'électrolyse, égale à 2,5 kWh auquel est retranché 2kWh, soit 0, 5 kWh, divisé par 12 kWh, soit 4% environ. Rapporté à une consommation de 10 litre (par heure) de carburant, soit 100 kWh, la perte énergétique du au rendement d'électrolyse de l'eau est égale à 0,5 kWh divisé par 100 kWh, soit 0,5%.

Dans un deuxième mode de réalisation de l'invention, une flotte captive d'autobus ou de petits camions, au sens d'un ensemble de véhicules destinés à revenir périodiquement au même endroit, comme un hangar de rangement ou un dépôt d'autobus, est munie sur chaque véhicule, d'un système de production d'hydrogène fonctionnant par électrolyse d'un composé riche en hydrogène, comme par exemple de l'eau de pluie collectée par un collecteur simple de type entonnoir muni d'un filtre pour éliminer les impuretés et relié à un réservoir d'eau de stockage. Une centrale électrique à terre, comprenant un moyen d'alimentation en énergie renouvelable constitué par des panneaux solaires ou panneaux photovoltaïques disposés sur le toit du hangar de rangement des véhicules ou sur toute structure du site de dépôt des véhicules est par ailleurs prévue pour recharger sur chaque véhicule de la flotte captive un accumulateur dédié au système de production d'hydrogène, installé sur ledit chaque véhicule en plus de la batterie de démarrage, d'éclairage et de confort.

Les panneaux solaire collectent de l'énergie solaire et la transforment en énergie électrique durant la journée, cette électricité est stockée dans une unité de stockage d'électricité centrale, qui peut être une batterie à terre, ou l'électricité est rejetée sur le réseau électrique dans le secteur où est situé le hangar. L'accumulateur du système de production et d'injection d'hydrogène à bord de chaque véhicule, composant la flotte captive, est alors rechargé, par exemple au retour de l'autobus ou du camion dans le hangar, ou durant la nuit par connexion sur l'unité de stockage d'électricité centrale ou sur le secteur, si l'électricité a été fournie au réseau durant la journée sans être stockée dans l'unité de stockage d'électricité centrale.

Dans cette configuration de réalisation de l'invention, sous réserve que la quantité d'énergie renouvelable, collectée par les panneaux solaires du hangar, suffise à alimenter, moyennée sur une année, en électricité les besoins de la flotte de véhicules considérés, pour la production d'hydrogène à bord par électrolyse, alors l'ensemble de la flotte captive bénéficie, d'un point de vue énergétique global, d'une réduction de consommation maximale d'énergie possible avec un système embarqué de production et d'injection de dihydrogène à titre d'additif dans un moteur à combustion. Dans ce cas, l'économie d'énergie du procédé dans sa globalité est égale à 12% auquel est retranché 0,5 % (énergie perdue sous forme de chaleur par l'électrolyseur de l'eau), soit 11,5 %. Ce gain énergétique est à comparé à la valeur de 4% si l'on considère une alimentation à partir d'une centrale électrique ayant un rendement de production d'électricité de 30%.

L'économie énergétique du procédé est donc fortement améliorée, en première approximation, lorsque la centrale de production d'électricité est une centrale d'énergie renouvelable.

La diminution d'émission de CO2 pour la flotte captive; si celle-ci utilise exclusivement un carburant fossile, est, en première approximation, égale à 12%.

Au niveau de l'ensemble centrale électrique et véhicules, la réduction d'énergie fossile consommée est égale à la réduction de consommation due à l'injection d'hydrogène dans les moteurs thermiques des autobus équipés. Pour un système basé sur la facturation de l'énergie fossile, la réduction de la facture correspondante est alors égale à la réduction de la consommation en carburant de la flotte d'autobus due à l'injection d'hydrogène, soit une économie de l'ordre de 12%.

Ce deuxième cas correspond au mode de mise en oeuvre le plus favorable de l'invention qui est celui de l'utilisation de sources d'énergies renouvelables par la centrale électrique.

Concernant les systèmes d'électrolyse produisant de l'hydrogène, l'invention est bien adaptée à des systèmes d'électrolyse produisant de l'hydrogène à partir de l'électrolyse de l'eau en courant continu, sans être limitée à ce seul composé riche en hydrogène

II existe d'autres composés riche en hydrogène, permettant de produire de l'hydrogène par électrolyse, et pour certains, de façon plus avantageuse, d'un point de vue énergétique, que l'eau. En effet, certains composés possèdent des potentiels chimiques de décomposition électrolytique plus faible que l'eau, permettant un gain sur le rendement énergétique de production d'hydrogène. C'est notamment le cas de l'ammoniaque et de l'urée.

Ainsi l'électrolyse d'ammoniaque, solution aqueuse du gaz ammoniac pour obtenir de l'hydrogène ou d'urée en solution aqueuse dans le même but est parfaitement possible avec l'invention pour remplacer l'élément de l'invention produisant de l'hydrogène par électrolyse d'eau. Un réservoir embarqué adapté à chaque cas de composé riche en hydrogène est seulement à prévoir pour chaque composé. II apparaît donc qu'un système embarqué produisant de l'hydrogène et alimenté électriquement serait ainsi un élément équivalent à l'électrolyseur de production d'hydrogène à partir d'eau, de l'invention telle que décrite ci-dessus.

De même, l'enseignement du dispositif de l'invention ne se limite pas à une première prise femelle et une seconde prise mâle, ainsi une première prise mâle et une seconde prise femelle, ou une première prise hermaphrodite partiellement mâle et femelle et une seconde prise complémentaire de la première prise partiellement femelle et mâle peuvent être utilisées de façon équivalente pour réaliser un moyen de connexion séparable ou temporaire au sens de l'invention. Un enfoncement mâle-femelle au sens de l'invention est donc entendu comme incluant l'enfoncement, de façon séparable électriquement et mécaniquement, d'une première prise d'un type femelle, mâle ou hermaphrodite dans une seconde prise d'un type complémentaire permettant la connexion électrique et mécanique avec la première, dans cette opération.

L'invention est susceptible d'application industrielle dans le domaine des véhicules munis d'un moteur thermique à chambre de combustion, interne ou externe.

Par ailleurs, aux fins de préciser les modalités de choix d'un « accumulateur dédié » ou « stockeur pour électrolyseur » ou « stockeur » pour un électrolyseur d'eau pour la production d'hydrogène et pour l'injection de cet hydrogène en tant qu'additif, dans une chambre de combustion d'un moteur d'un véhicule selon l'invention, les considérations ci-après s'appliquent.

Le stockeur permet de fournir une caractéristique courant tension adaptée à un électrolyseur dont la capacité de production d'hydrogène doit atteindre jusqu'à à 1000 litres par heure en régime nominal, selon la puissance en kW de l'application visée.

Un tel stockeur pour électrolyseur permet de s'affranchir de convertisseur de tension supplémentaire, notamment pour abaisser ou remonter une tension continue autour de la tension nominale de l'électrolyseur, 24 Volts environ. Cette conversion de tension est un facteur de perte énergétique.

L'application nécessite des variations de production d'hydrogène importantes et rapides, afin de suivre la charge du moteur, et relativement courtes dans le temps, inférieures à une minute, correspondant à des phases d'augmentation de la charge de l'application. Ainsi le stockeur pour électrolyseur doit permettre de suivre en courant la caractéristique de l'électrolyseur lorsque celui-ci est sollicité jusqu'à des densités de courant de l'ordre de 2 ampères par cm² de surface active de la cellule électrolytique. Le courant d'électrolyse, donc le courant en sortie du stockeur, peut ainsi atteindre 500 Ampères, avec des variations et des cycles rapides.

Afin d'éviter des pertes par effet joule lors de la décharge, le stockeur doit être spécialement conçu et dimensionné pour suivre le profile de charge de l'électrolyseur, tout en gardant une profondeur de décharge importante, de l'ordre de 80%, sans endommagement dans le temps, et ce, aux forts courants. Il n'est pas envisageable d'implémenter le procédé par des composants de refroidissement du stockeur, cela reviendrait à altérer le rendement énergétique global du procédé.

Compte-tenu de l'application, les stockeurs d'électrolyseur doivent pouvoir atteindre 2500 cycles de charge / décharge sans perte de capacité de stockage supérieure à 20% de la capacité initiale.

Le stockeur doit également posséder une excellente densité de stockage volumique et massique, surtout pour les applications embarquées.

Ainsi, parmi les différentes technologies, la technologie Lithium ion présente les meilleures caractéristiques. Parmi cette technologie, il est souhaitable d'intégrer des éléments d'accumulateur de petite capacité, typiquement 10 à 20 A.h, spécialement développés pour atteindre des décharges de l'ordre de 5xC sur des durées significatives, supérieures à une minute, soit 5 fois en courant la valeur de leur capacité de stockage, sans perte de capacité et sans endommagement. A titre d'exemple, 4 assemblages en parallèle de 8 éléments en série permettent d'atteindre les caractéristiques souhaitées du stockeur d'électrolyseur.

Les accumulateurs au plomb des véhicules thermiques sont des accumulateurs permettant de délivrer de fortes intensités à faible tension (12 V), mais ces derniers ont une faible densité énergétique et le nombre de cycle de charge décharge est très faible en dessous de 50% de profondeur de décharge. Ils ne constituent pas de ce point de vue des « stockeurs » au sens de la présente invention.

Les accumulateurs Nickel métal Hydrure, NimH, aujourd'hui communément utilisés dans les véhicules électriques ou hybrides sont limités en courant de décharge à 1xC (une fois leur capacité). Or les assemblages d'éléments NimH, adaptés aux moteurs électriques des véhicules hybrides, par exemple des autobus, sont de l'ordre de plusieurs centaines de volts, de 300 à 600 volts en tension nominale, selon la littérature. Pour une batterie NimH de bus hybride, par exemple de 20 kWh, la capacité est exprimée en A. h, soit pour une tension de la batterie de 300 V, une capacité de 66 A.h, considérant une décharge maximum de 1xC, le courant de décharge maximum, garantissant l'intégrité de la batterie dans le temps, est de 66 A seulement. Les batteries de véhicules hybrides actuelles ne peuvent donc pas être utilisées en tant que stockeur pour électrolyseur.

L'état de l'art fait également référence aux super-capacités, couplés à un accumulateur, pour répondre aux besoins de forts courants, mais, ces composants qui complexifient sensiblement l'architecture électrique, sont principalement conçus pour répondre aux courants d'appel très forts des moteurs électriques des véhicules hybrides, notamment lorsque la demande en couple mécanique est importante. La puissance délivrée est importante mais pendant un temps très court qui n'est pas caractéristique de celui de l'électrolyseur.

## Revendications

1. Procédé d'approvisionnement en énergie électrique d'un accumulateur, de technologie Lithium ion, dédié à l'alimentation d'un système de production de dihydrogène par électrolyse et d'injection dudit dihydrogène, à titre d'additif, dans une chambre de combustion de carburant hydrocarboné d'un moteur thermique d'un véhicule apte à se déplacer par rapport à un environnement, **caractérisé en ce qu'**il comprend les étapes suivantes :
- connecter, électriquement et mécaniquement, ledit accumulateur dudit système de production et d'injection de dihydrogène à une centrale électrique fixe par rapport audit environnement ;
- recharger l'accumulateur en énergie électrique au moyen de ladite centrale électrique ;
- déconnecter, électriquement et mécaniquement, l'accumulateur et la centrale électrique, pour rendre l'accumulateur autonome électriquement et mécaniquement, vis-à-vis de la centrale électrique ;
- alimenter électriquement, au moyen dudit accumulateur, ledit système de production et d'injection de dihydrogène dans la chambre de combustion du moteur thermique pour réduire la consommation en carburant hydrocarboné du véhicule

2. Dispositif pour la diminution de la consommation en carburant hydrocarboné d'un véhicule automobile, comprenant un véhicule apte à déplacer sa position par rapport à un environnement, ledit véhicule comprenant un moteur thermique , ledit moteur comprenant une chambre de combustion d'un carburant hydrocarboné , ledit véhicule comprenant un système de production de dihydrogène par électrolyse et d'injection dudit dihydrogène, à titre d'additif, dans la chambre de combustion, ledit système de production et d'injection de dihydrogène étant activé électriquement et alimenté électriquement par un accumulateur rechargeable électriquement et disposé à bord du véhicule, **caractérisé en ce qu'**il comprend une centrale électrique disposée à terre, dans l'environnement, et un moyen de connexion électrique et mécanique reliant ladite centrale électrique et l'accumulateur, **en ce que** la centrale est apte à recharger électriquement l'accumulateur lorsque cet accumulateur est relié électriquement et mécaniquement, par le moyen de connexion, à cette centrale, **en ce que** ledit moyen de connexion est constitué d'une première prise électrique, fixe par rapport au véhicule et reliée électriquement à l'accumulateur, et constitué d'une seconde prise électrique, fixe par rapport à l'environnement et reliée électriquement à la centrale, **en ce que** la première prise électrique et la seconde prise électrique sont en contact électrique et mécanique, de façon séparable, par un moyen de fixation de la première prise sur la seconde prise, **en ce que** l'accumulateur est dédié à l'alimentation électrique dudit système de production de dihydrogène par électrolyse et d'injection dudit dihydrogène, et **en ce que** l'accumulateur est de technologie Lithium ion.

3. Dispositif selon la revendication 2 dans lequel ledit système de production et d'injection de dihydrogène comprend un réservoir d'eau et un électrolyseur, pour la production de dihydrogène à partir de l'électrolyse de l'eau dudit réservoir d'eau, au moyen de l'énergie électrique dudit accumulateur dédié

4. Dispositif selon la revendication 2 dans lequel ledit système de production et d'injection de dihydrogène comprend un réservoir d'ammoniaque et un électrolyseur, pour la production de dihydrogène à partir de l'électrolyse de l'ammoniaque dudit réservoir d'ammoniaque, au moyen de l'énergie électrique dudit accumulateur dédié

5. Dispositif selon la revendication 2 dans lequel ledit système de production et d'injection de dihydrogène comprend un réservoir d'urée en solution aqueuse et un électrolyseur, pour la production de dihydrogène à partir de l'électrolyse de l'urée dudit réservoir d'urée en solution aqueuse, au moyen de l'énergie électrique dudit accumulateur dédié

6. Dispositif selon l'une quelconque des revendications 2 à 5 dans lequel ladite centrale électrique comprend un moyen de production d'énergie électrique à partir d'un combustible fossile et ledit moyen de production possède un rendement de conversion en énergie électrique, de l'énergie contenue dans ledit combustible fossile, qui est supérieur au rendement de conversion du carburant hydrocarboné en énergie électrique à bord du véhicule

7. Dispositif selon l'une quelconque des revendications 2 à 6 dans lequel ladite centrale électrique comprend un moyen de production d'énergie électrique à partir d'une source d'énergie renouvelable

8. Dispositif selon la revendication 7 dans lequel ladite source d'énergie renouvelable est solaire

9. Dispositif l'une quelconque des revendications 2 à 8 dans lequel ladite centrale électrique comprend un réseau de distribution électrique dans un secteur géographique

10. Dispositif selon l'une quelconque des revendications 2 à 9 dans lequel ledit moyen de fixation est un moyen élastique et mécanique permettant un enfoncement mâle-femelle de la première prise et de la seconde prise
